# EUROPÄISCHE PATENTSCHRIFT

(11) **EP 3 634 794 B1**
(45) Veröffentlichungstag und Bekanntmachung des Hinweises auf die Patenterteilung: **22.02.2023**
(21) Anmeldenummer: 18724499.1
(22) Anmeldetag: 03.05.2018
(51) Int. Cl.: B60H 1/24, B60H 1/34

(54) **KRAFTFAHRZEUG MIT EINER VORRICHTUNG FÜR DIE BELÜFTUNG EINER HINTEREN SITZREIHE**
MOTOR VEHICLE WITH A DEVICE FOR VENTILATING A REAR ROW OF SEATS
VÉHICULE AUTOMOBILE AVEC UN DISPOSITIF DE VENTILATION D'UNE RANGÉE DE SIÈGES ARRIÈRE

(30) Priorität: 06.06.2017 DE 102017209505
(43) Veröffentlichungstag der Anmeldung: 15.04.2020
(73) Patentinhaber: Bayerische Motoren Werke Aktiengesellschaft, 80809 München (DE)
(72) Erfinder: HEIL, Michael, 85661 Forstinning (DE); ROTH, Irina, 85640 Putzbrunn (DE)
(86) Internationale Anmeldenummer: PCT/EP2018/061397
(87) Internationale Veröffentlichungsnummer: WO 2018/224219

(56) Entgegenhaltungen:
- EP-A1- 0 425 721
- US-A- 2 234 268
- US-A- 2 336 089

## Beschreibung

Die vorliegende Erfindung betrifft ein Kraftfahrzeug umfassend eine Belüftungsanlage für die Bereitstellung von Luft, die für die Belüftung einer hinteren Sitzreihe des Kraftfahrzeugs vorgesehen ist.

Für die Klimatisierung einer hinteren Sitzreihe - also etwa einer zweiten oder einer dritten Sitzreihe - wird üblicherweise klimatisierte Luft aus einem Frontklimagerät durch Luftkanäle in der Mittelkonsole geführt und mittels verstellbaren Ausströmdüsen auf die dort befindlichen Personen geblasen. Die Luftverteilung ist dabei stark gerichtet und kann nur schwer zugfrei gestaltet werden. Die demgemäß entstehende Luftzirkulation sorgt nicht immer für eine optimale Raumklimatisierung der betreffenden hinteren Sitzreihe.

Weiterhin zeigt die US 2 234 268 A ein Gebläse, das genau hinter einer Rückenlehne eines Vordersitzes angeordnet ist. Die Rückenlehne leitet die Luft des Gebläses nach oben.

Des Weiteren zeigt die US 2 336 089 A einen Fahrzeugsitz mit einem Luftkanal, der an der Rückseite eines Vordersitzes ausgebildet ist. Ein Lüfterpaar ist unterhalb des Fahrzeugsitzes angeordnet.

Ferner zeigt die EP 0 425 721 A1 ein gattungsgemäßes Kraftfahrzeug mit einer Belüftungsanlage, wobei im Bereich einer Mittelkonsole eine Wurfdüse angeordnet ist, aus der eine Luftströmung austritt und in einem Lufteintrittsbereich in eine Dachverkleidung eintritt.

Der vorliegenden Erfindung liegt somit die Aufgabe zugrunde, ein Kraftfahrzeug, umfassend eine Belüftungsanlage für die Bereitstellung von Luft, die für die Belüftung einer hinteren Sitzreihe des Kraftfahrzeugs vorgesehen ist, anzugeben, wobei die Belüftungsanlage eine verbesserte zugfreie und geräuscharme Belüftung der hinteren Sitzreihe gewährleistet.

Diese Aufgabe wird mit einem Kraftfahrzeug gemäß Anspruch 1 gelöst. Vorteilhafte Weiterbildungen der Erfindung sind Gegenstand der abhängigen Ansprüche.

Erfindungsgemäß umfasst ein Kraftfahrzeug eine Belüftungsanlage für die Bereitstellung von Luft, die für die Belüftung einer hinteren Sitzreihe des Kraftfahrzeugs vorgesehen ist, aufweisend eine Vorrichtung für die Belüftung der hinteren Sitzreihe des Kraftfahrzeugs, die eine Ausströmdüse für Luft, die für die Belüftung der hinteren Sitzreihe vorgesehen ist, und einen Zufuhrkanal für die Zuführung der Luft zur Ausströmdüse beinhaltet. Die Erfindung zeichnet sich dadurch aus, dass die Ausströmdüse im Bereich zwischen vorderen, bevorzugt vordersten, Sitzen, die sich, bevorzugt unmittelbar, vor der hinteren Sitzreihe befinden, befestigt und so ausgerichtet ist, dass sie die Luft zu einem Bereich des Fahrzeugdachs lenkt, der ungefähr in der Verlängerung der Rückenlehne der vorderen Sitze liegt. Die Ausströmdüse liegt in Längenrichtung und Breitenrichtung des Kraftfahrzeuges zwischen den vorderen Sitzen.

Durch diese Anordnung wird einerseits erreicht, dass die Passagiere auf der hinteren Sitzreihe nicht direkt von der klimatisierten Luft in einem gerichteten Strahl angeblasen werden, sondern dass die in den Bereich des Fahrzeugdachs gerichtete Luft vom Fahrzeugdach reflektiert bzw. abgelenkt und dabei gleichzeitig verteilt und zu den Passagieren weitergeleitet wird. Diese empfinden eine derartige Luftströmung im Vergleich zu einem direkt auf sie gerichteten Luftstrahl als weicher und zugfrei und dadurch als angenehmer. Die Vorrichtung weist den weiteren Vorteil auf, dass durch das Anblasen des Fahrzeugdachs auch eine Minderung des negativen Effekts erzielt werden kann, den ein durch Sonneneinstrahlung aufgeheiztes Fahrzeugdach auf die Raumtemperatur - insbesondere bei Vorhandensein eines Panoramadachs oder eines Schiebedachs - hat. Gegenüber herkömmlichen, im Fahrzeugdach verlegten, Zufuhrkanälen bietet die Vorrichtung deutliche Vorteile bei der dynamischen Luftabkühlung, da längere Kanalsysteme sich aufgrund ihrer Trägheit nur deutlich langsamer um-temperieren lassen, d.h. gekühlte Luft kann bei einem aufgeheizten Fahrzeug erst nach einigen Minuten zur Verfügung gestellt werden.

Wie bereits eingangs erläutert, kann die Vorrichtung nicht nur für eine zugfreie Belüftung einer zweiten Sitzreihe, sondern auch einer dritten Sitzreihe oder weiterer Sitzreihen eines Kraftfahrzeugs dienen. Dabei ist es möglich, dass die Vorrichtung nicht zwischen den vordersten Sitzen angeordnet ist, sondern zwischen den vor der zu klimatisierenden/belüftenden Sitzreihe angeordneten Sitzen (sofern diese einzelnen ausgestaltet sind) oder in einer entsprechenden Ausnehmung einer entsprechenden Sitzbank. Zur Verdeutlichung ist festzuhalten, dass mit einer Bezugnahme auf die vorderen Sitze immer auf eine weitestmöglich nach hinten (und damit auch nach unten) eingestellte Stellung der vorderen Sitze Bezug genommen wird. Unter der Bezeichnung "Fahrzeugdach" ist beispielsweise ein sogenanntes Panoramadach, ein Schiebedach oder ein "normaler" Fahrzeughimmel eines Kraftfahrzeugs ohne Panoramadach bzw. Schiebedach zu verstehen. Es versteht sich, dass der Winkel, unter dem die Ausströmdüse die Luft an das Fahrzeugdach lenkt, nicht exakt auf einen bestimmten Winkel festgelegt ist, sondern so bemessen ist, dass die Klimatisierung von den Passagieren auf der betreffenden hinteren Sitzreihe als angenehm empfunden wird.

Gemäß der vorliegenden Erfindung ist in der Ausströmdüse ein Verwirbelungsdämpfer angebracht, der die Strömung der austretenden Luft beruhigt - also möglichst laminar formt. Dadurch kann ein so genannter Freistrahl gebildet werden, der durch eine beruhigte Strömung gekennzeichnet und darüber hinaus in der Lage ist, Luft mit Ausströmgeschwindigkeiten von beispielsweise 7 m/s im Kernstrahl zu liefern. Durch Bildung eines derartigen Freistrahls kann eine starke Geräuschdämpfung im Vergleich zu einem turbulenten Luftstrahl erzielt werden, wie er üblicherweise aus einem herkömmlichen Ausströmer austritt. Dadurch kann der Tatsache Rechnung getragen werden, dass es häufig als störend empfunden wird, dass die üblichen Klimatisierungen akustisch auffällig sind und somit in anderen Worten als zu laut wahrgenommen werden.

Es kann von Vorteil sein, wenn der Verwirbelungsdämpfer eine Vielzahl von parallelen Röhren mit beispielsweise rundem oder wabenförmigem Querschnitt umfasst, die jeweilige Teilluftströme bilden und zur Verwirbelungsdämpfung bzw. Geräuschdämpfung beitragen. Des Weiteren kann die Wirkung des Verwirbelungsdämpfers noch weiter verbessert werden, wenn er ein Vliesmaterial, ein Lochblech und/oder ein Gitternetz umfasst. Falls mehrere Lochbleche und/oder Gitternetze in Strömungsrichtung der Luft hintereinander vorgesehen sind, kann in vorteilhafter Weise eine Optimierung bzw. Reduzierung der Verwirbelungen und des durch die Ausströmdüse erzeugten Geräusches erzielt werden.

Eine besonders angenehme und wirkungsvolle Klimatisierung ergibt sich, wenn der Ausströmwinkel der Ausströmdüse bezüglich der Horizontalen - genauer gesagt einer Richtung horizontal nach hinten - zwischen 65° und 85° beträgt, wobei ein Bereich zwischen 70° und 80° bevorzugt ist und in vielen Fällen ein Winkel von etwa 75° optimal ist.

Es ist von Vorteil, wenn die Ausströmdüse so ausgestaltet und befestigt ist, dass der Ausströmwinkel festgelegt und damit unveränderbar ist. Dies bietet den Vorteil, dass zum einen keinerlei Einstellmechanismus zum Verstellen der Ausströmdüse in Form von Lamellen oder ähnlichem vorgesehen zu werden braucht, und zum anderen kann dadurch ab Werk ein optimaler Ausströmwinkel vorgegeben werden, der nicht versehentlich verstellt werden kann.

Als optimale Lage bezüglich der Höhenrichtung des Kraftfahrzeugs ergibt sich, wenn die Ausströmdüse zwischen 5 cm und 25 cm oberhalb der niedrigsten Stelle der Sitzfläche der vorderen Sitze angebracht ist, wobei ein Bereich zwischen 10 cm und 20 cm bevorzugt ist und in vielen Fällen ein Wert von etwa 15 cm optimal ist.

Als optimale Lage bezüglich der Längenrichtung des Kraftfahrzeugs ergibt sich, wenn die Hinterkante der Ausströmdüse nicht weiter nach hinten hervorragt als die Hinterkante der vorderen Sitze. In anderen Worten befindet sich die Ausströmdüse bei ganz nach hinten verstellten vorderen Sitzen zwischen den beiden Sitzen.

Einige vorteilhafte Ausführungsformen der Erfindung werden nachfolgend anhand der Figuren beispielhaft erläutert.

Es zeigen:
Fig. 1 eine schematische Darstellung einer in ein erfindungsgemäßes Kraftfahrzeug eingebauten Vorrichtung in Seitenschnittansicht;
Fig. 2 eine schematische Darstellung einer vorteilhaften Anordnung der Vorrichtung im erfindungsgemäßen Kraftfahrzeug in Seitenschnittansicht; und
Fig. 3 bis 6 Beispiele für Elemente, die in einem Verwirbelungsdämpfer der Ausströmdüse für die Vorrichtung verwendet werden können.

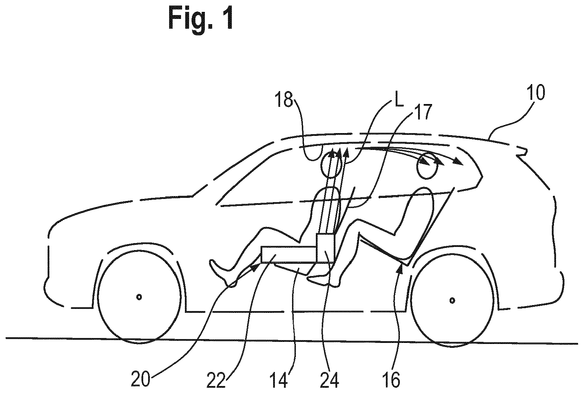

In Fig. 1 ist ein erfindungsgemäßes Kraftfahrzeug 10 dargestellt, in das eine Ausführungsform einer Vorrichtung 20 für die Belüftung einer nur schematisch mit einer Bezugszahl 16 bezeichneten hinteren Sitzreihe des Kraftfahrzeugs 10 eingebaut ist. Zwischen den nur schematisch mit einer Bezugszahl 14 bezeichneten vorderen Sitzen ist eine Ausströmdüse 24 angeordnet, die über einen Zufuhrkanal 22 mit der Luft versorgt wird, die für die Klimatisierung der hinteren Sitzreihe 16 verwendet wird. Die Ausströmdüse 24 ist so ausgestaltet, dass sie die Luft in einem festgelegten Winkel in etwa parallel zur Rückenlehne 17 der vorderen Sitze 14 nach oben zum Fahrzeugdach 18 hin bläst, das wiederum die Luft zur hinteren Sitzreihe 16 hin ablenkt und dabei gleichzeitig verteilt. Die Strömung der Luft ist hierbei durch Pfeile L symbolisch dargestellt. Wie später erläutert wird, kann die Luft in einem laminaren, sogenannten Freistrahl nach oben geblasen werden, was durch parallele Pfeile L angedeutet ist.

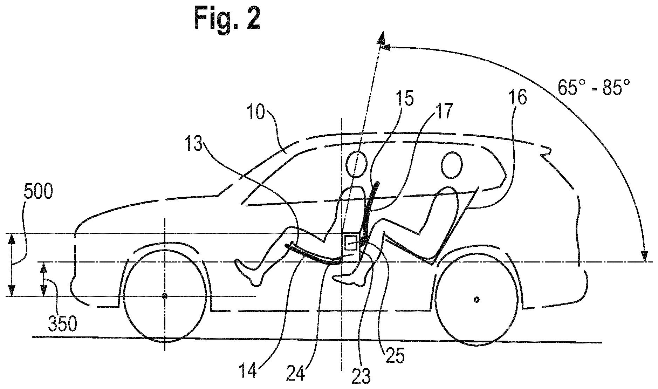

In Fig. 2 sind in beispielhafter Weise einige Möglichkeiten gegeben, wie die Ausströmdüse 24 der Vorrichtung 20 mit Vorteil in dem Kraftfahrzeug 10 angeordnet ist, wobei der besseren Übersichtlichkeit halber der Zufuhrkanal 22 von Fig. 1 weggelassen ist. Die Ausströmdüse 24 ist so ausgerichtet, dass sie die Luft in einem Winkel zwischen 65° und 85° zur Horizontalen nach schräg hinten oben bläst, wobei hier die Strahlrichtung L mit der Ausrichtung der Rückenlehne 17 der nicht eigens dargestellten Vordersitze zusammenfällt. Es versteht sich, dass sich der werksseitig eingestellte Ausströmwinkel nicht ändert, wenn die Neigung der Rückenlehne 17 von einem Passagier auf dem betreffenden vorderen Sitz verändert wird. Bei dem in Fig. 2 dargestellten Beispiel befindet sich die Oberseite der Ausströmdüse 24 ca. 500 mm oberhalb des Fahrzeugbodens, während sich die Unterseite der Ausströmdüse 24 ca. 350 mm oberhalb des Fahrzeugbodens befindet. Dadurch ergibt sich, dass die Oberseite der Ausströmdüse 24 zwischen 5 cm und 25 cm oberhalb der niedrigsten Stelle der nur schematisch angedeuteten Sitzfläche 13 der vorderen Sitze 14 angeordnet ist. Die Hinterkante 23 der Ausströmdüse 24 befindet sich dabei maximal so weit hinten wie die Vorderkante 15 der Rückenlehne 17 der vorderen Sitze 14.

Wie in Fig. 2 ebenfalls nur schematisch dargestellt, umfasst die Ausströmdüse 24 einen nur schematisch dargestellten Verwirbelungsdämpfer 25, der Verwirbelungen der ausströmenden Luft unterdrückt bzw. dämpft und dadurch auch zur Geräuschminderung beiträgt, weil das Strömungsrauschen minimiert wird.

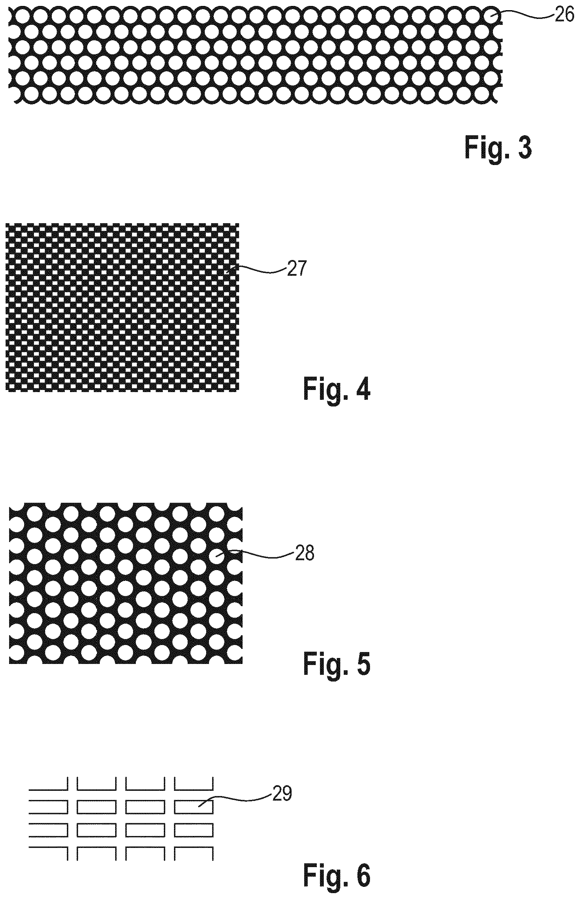

Gemäß Darstellung in Fig. 3 kann der Verwirbelungsdämpfer 25 eine Vielzahl von parallelen Rundröhren 26 bzw. Waben umfassen, die beispielsweise bis zu 30 mm tief sein können.

Gemäß Darstellung in Fig. 4 kann der Verwirbelungsdämpfer 25 zur Erzielung der Verwirbelungsdämpfung zusätzlich oder alternativ Filter- oder Vliesmaterial 27 aufweisen.

Gemäß Darstellung in Fig. 5 kann der Verwirbelungsdämpfer 25 zusätzlich oder alternativ ein Lochblech 28 oder mehrere Lochbleche 28 umfassen.

Gemäß Darstellung in Fig. 6 kann der Verwirbelungsdämpfer 25 ein Gitternetz 29 enthalten.

Es versteht sich, dass die in den Fig. 3 bis 6 dargestellten Elemente auch in mehrfacher Ausfertigung - und/oder in beliebiger Kombination - vorgesehen sein können, wobei sie vorzugsweise in Strömungsrichtung der Luft hintereinander angeordnet sein können.

Es ist festzuhalten, dass die unter Bezug auf einzelne Ausführungsformen bzw. Varianten beschriebenen Merkmale der Erfindung, wie beispielsweise Art und Ausgestaltung der einzelnen Elemente der Ausströmdüse und des Verwirbelungsdämpfers sowie deren räumliche Anordnung, auch bei anderen Ausführungsformen vorhanden sein können, außer wenn es anders angegeben ist oder sich aus technischen Gründen von selbst verbietet. Von derartigen, in Kombination beschriebenen, Merkmalen einzelner Ausführungsformen müssen außerdem nicht notwendigerweise immer alle Merkmale in einer betreffenden Ausführungsform realisiert sein.

## Patentansprüche

1. Kraftfahrzeug (10), umfassend eine Belüftungsanlage für die Bereitstellung von Luft, die für die Belüftung einer hinteren Sitzreihe (16) des Kraftfahrzeugs (10) vorgesehen ist, aufweisend:
eine Vorrichtung (20) für die Belüftung der hinteren Sitzreihe (16) des Kraftfahrzeugs (10), die eine Ausströmdüse (24) für Luft, die für die Belüftung der hinteren Sitzreihe (16) vorgesehen ist, und
einen Zufuhrkanal (22) für die Zuführung der Luft zur Ausströmdüse (24) beinhaltet, wobei
die Ausströmdüse (24) im Bereich zwischen vor der hinteren Sitzreihe (16) angeordneten vorderen Sitzen (14) des Kraftfahrzeuges (10) befestigt und so ausgerichtet ist, dass sie die Luft zu einem Bereich des Fahrzeugdachs (18) lenkt, der ungefähr in der Verlängerung der Rückenlehne (17) der vorderen Sitze (14) liegt,
**dadurch gekennzeichnet, dass**
in der Ausströmdüse (24) ein Verwirbelungsdämpfer (25) zur Erzielung eines strömungsberuhigten Freistrahls vorgesehen ist.

2. Kraftfahrzeug (10) nach Anspruch 1,
wobei der Verwirbelungsdämpfer (25) eine Vielzahl von parallelen Röhren (26) mit rundem oder wabenförmigem Querschnitt umfasst.

3. Kraftfahrzeug (10) nach Anspruch 1 oder 2,
wobei der Verwirbelungsdämpfer (25) ein Vliesmaterial (27), ein Lochblech (28) und/oder ein Gitternetz (29) umfasst.

4. Kraftfahrzeug (10) nach einem der Ansprüche 1 bis 3,
wobei der Verwirbelungsdämpfer (25) eine Mehrzahl von Lochblechen (28) und/oder Gitternetzen (29) umfasst, die in Strömungsrichtung der Luft hintereinander angeordnet sind.

5. Kraftfahrzeug (10) nach einem der vorhergehenden Ansprüche,
wobei der Ausströmwinkel der Ausströmdüse (24) zwischen 65° und 85°, vorzugsweise zwischen 70° und 80°, insbesondere bei etwa 75°, bezüglich einer Richtung horizontal nach hinten beträgt.

6. Kraftfahrzeug (10) nach einem der vorhergehenden Ansprüche,
wobei der Ausströmwinkel der Ausströmdüse (24) unveränderbar ist.

7. Kraftfahrzeug (10) nach einem der vorhergehenden Ansprüche,
wobei sich die Ausströmdüse (24) zwischen 5 cm und 25 cm, vorzugsweise zwischen 10 cm und 20 cm, insbesondere etwa 15 cm, oberhalb der niedrigsten Stelle der Sitzfläche (13) der vorderen Sitze (14) befindet.

8. Kraftfahrzeug (10) nach einem der vorhergehenden Ansprüche,
wobei sich die Hinterkante (23) der Ausströmdüse (24) höchstens so weit hinten befindet wie die Vorderkante (15) der Rückenlehne (17) der vorderen Sitze (14).

## Claims

1. Motor vehicle (10), comprising a ventilation system for the provision of air which is provided for ventilation of a rear seat row (16) of the motor vehicle (10), having:
an apparatus (20) for the ventilation of the rear seat row (16) of the motor vehicle (10), which apparatus comprises a vent nozzle (24) for air which is provided for the ventilation of the rear seat row (16) and
a feed duct (22) for the feed of the air to the vent nozzle (24),
the vent nozzle (24) being fastened in the region between front seats (14) of the motor vehicle (10) which are arranged in front of the rear seat row (16)
and being oriented in such a way that it deflects the air to a region of the vehicle roof (18) which lies approximately in the extension of the backrest (17) of the front seats (14),
**characterized in that**
a turbulence damper (25) for achieving a flow-calmed open jet is provided in the vent nozzle (24).

2. Motor vehicle (10) according to Claim 1,
the turbulence damper (25) comprising a multiplicity of parallel tubes (26) with a round or honeycomb-shaped cross section.

3. Motor vehicle (10) according to Claim 1 or 2,
the turbulence damper (25) comprising a nonwoven material (27), a perforated plate (28) and/or a grid (29).

4. Motor vehicle (10) according to one of Claims 1 to 3,
the turbulence damper (25) comprising a plurality of perforated plates (28) and/or grids (29) which are arranged behind one another in the flow direction of the air.

5. Motor vehicle (10) according to one of the preceding claims,
the outflow angle of the vent nozzle (24) being between 65° and 85°, preferably between 70° and 80°, in particular at approximately 75°, with regard to a horizontally rearward direction.

6. Motor vehicle (10) according to one of the preceding claims,
the outflow angle of the vent nozzle (24) being unchangeable.

7. Motor vehicle (10) according to one of the preceding claims,
the vent nozzle (24) being situated between 5 cm and 25 cm, preferably between 10 cm and 20 cm, in particular approximately 15 cm, above the lowest point of the seat face (13) of the front seats (14).

8. Motor vehicle (10) according to one of the preceding claims,
the rear edge (23) of the vent nozzle (24) being situated at most as far to the rear as the front edge (15) of the backrest (17) of the front seats (14).

## Revendications

1. Véhicule automobile (10), comprenant un système de ventilation pour la fourniture d'air prévu pour la ventilation d'une rangée de sièges arrière (16) du véhicule automobile (10), présentant :
un dispositif (20) pour la ventilation de la rangée de sièges arrière (16) du véhicule automobile (10), qui comprend une buse de sortie (24) pour l'air prévu pour la ventilation de la rangée de sièges arrière (16), et
un canal d'amenée (22) pour l'amenée de l'air vers la buse de sortie (24),
la buse de sortie (24) étant fixée dans la zone entre des sièges avant (14) du véhicule automobile (10) agencés devant la rangée de sièges arrière (16) et étant orientée de manière à diriger l'air vers une zone du toit du véhicule (18) qui se situe approximativement dans le prolongement du dossier (17) des sièges avant (14),
**caractérisé en ce que**
un amortisseur de turbulence (25) est prévu dans la buse de sortie (24) pour obtenir un jet libre à écoulement calme.

2. Véhicule automobile (10) selon la revendication 1, dans lequel l'amortisseur de turbulence (25) comprend une pluralité de tubes parallèles (26) de section transversale circulaire ou alvéolaire.

3. Véhicule automobile (10) selon la revendication 1 ou 2, dans lequel l'amortisseur de turbulence (25) comprend un matériau non tissé (27), une tôle perforée (28) et/ou une grille (29).

4. Véhicule automobile (10) selon l'une quelconque des revendications 1 à 3, dans lequel l'amortisseur de turbulence (25) comprend une pluralité de tôles perforées (28) et/ou de grilles (29) qui sont agencées les unes derrière les autres dans la direction d'écoulement de l'air.

5. Véhicule automobile (10) selon l'une quelconque des revendications précédentes, dans lequel l'angle de sortie de la buse de sortie (24) est d'entre 65° et 85°, de préférence d'entre 70° et 80°, notamment d'environ 75°, par rapport à une direction horizontale vers l'arrière.

6. Véhicule automobile (10) selon l'une quelconque des revendications précédentes, dans lequel l'angle de sortie de la buse de sortie (24) est invariable.

7. Véhicule automobile (10) selon l'une quelconque des revendications précédentes, dans lequel la buse de sortie (24) se trouve entre 5 cm et 25 cm, de préférence entre 10 cm et 20 cm, notamment environ 15 cm, au-dessus du point le plus bas de la surface d'assise (13) des sièges avant (14).

8. Véhicule automobile (10) selon l'une quelconque des revendications précédentes, dans lequel le bord arrière (23) de la buse de sortie (24) se trouve au plus aussi loin en arrière que le bord avant (15) du dossier (17) des sièges avant (14).
